# FASCICULE DE BREVET EUROPEEN

(11) **EP 3 687 674 B1**
(45) Date de publication et mention de la délivrance du brevet: **10.11.2021**
(21) Numéro de dépôt: 18772839.9
(22) Date de dépôt: 26.09.2018
(51) Int. Cl.: B01F 7/08, B01F 7/00, B01F 7/02, B01F 15/02, B01F 13/00, A01K 5/00

(54) **TREMIE MELANGEUSE ET DISTRIBUTRICE**
TRICHTER ZUM MISCHEN UND AUSGEBEN
MIXING-DISCHARGING HOPPER

(30) Priorité: 29.09.2017 FR 1759126
(43) Date de publication de la demande: 05.08.2020
(73) Titulaire: Etablissements Emily, 29800 Tréflévénez (FR)
(72) Inventeur: GUENGANT, Michel, 29440 Plougar (FR); LE MILBEAU, Lionel, 29800 Treflevenez (FR); RUNGOAT, David, 29800 Treflevenez (FR); MIOSSEC, Arnaud, 29440 Plouzevede (FR)
(74) Mandataire: Cabinet Le Guen Maillet
(86) Numéro de dépôt international: PCT/EP2018/076181
(87) Numéro de publication internationale: WO 2019/063644

(56) Documents cités:
- EP-A1- 0 490 688
- FR-A1- 2 893 517
- US-A- 1 563 101
- US-A- 3 168 291

## Description

La présente invention concerne une trémie mélangeuse et distributrice. Une telle trémie est destinée à être portée par un engin de levage pour mélanger des matières et les distribuer, par exemple, des aliments pour des animaux. Une trémie mélangeuse et distributrice installée en poste fixe fait également partie de l'invention.

Une trémie connue, destinée à être attelée à un porte-outil lorsqu'il est attelé à un engin porteur, pour charger une matière et la distribuer, est décrite dans la demande de brevet publiée sous le n° FR-A1-3031430 et déposée au nom de la demanderesse. La trémie comprend une benne, un organe de vidange disposé contre le fond de ladite benne, un moyen d'attelage avec ledit porte-outil. L'organe de vidange est relié à un moyen d'entraînement à rotation destiné à être accouplé avec un organe correspondant présent sur le porte-outil, l'accouplement entre ces deux organes étant réalisé à l'issue de l'attelage mécanique de la trémie sur ledit porte-outil. Le moyen d'entraînement à rotation comprend un engrenage, un crabot, destiné à coopérer avec un engrenage, un crabot correspondant porté par le porte-outil. Une goulotte de vidange est raccordée à l'extérieur d'une paroi latérale constitutive de ladite trémie.

La trémie peut ainsi être attelée à un porte-outil préalablement attelé à un engin de levage. Le porte-outil peut aussi avantageusement faire fonctionner la trémie.

Le conducteur de l'engin porteur attelle la trémie sur le porte-outil de l'engin porteur. La trémie est déplacée sous un conteneur pour remplir sa benne de chargement, par exemple d'un aliment à distribuer à des animaux. La trémie est ensuite déplacée en direction d'une mangeoire, puis le conducteur actionne la commande qui provoque la rotation de l'organe de vidange dans son sens permettant la vidange de ladite trémie au travers de sa goulotte, pour déverser son contenu.

Par ailleurs, est connu un godet présenté dans le brevet FR-A1-2893517 et qui permet de mélanger et de distribuer des produits granulaires ou fibreux en vrac destinés par exemple à l'alimentation du bétail. Le godet comprend une benne, une vis de distribution montée à rotation dans la benne et à proximité de sa paroi de fond arrondie parallèlement à celle-ci et permettant de transporter les produits vers une ouverture d'évacuation obturable par une trappe réalisée dans au moins l'une des parois latérales de la benne, et un ensemble de pales monté à rotation dans la benne, de manière à permettre le mélange des produits. La vis de distribution et les pales de mélange des produits sont portées par un même arbre monté à rotation entre les deux parois latérales du godet perpendiculairement à celles-ci, les pales mélangeuses étant solidaires radialement de l'arbre rotatif. En fonctionnement, on constate que pendant le mélange de la matière, la pression qu'elle exerce sur la trappe de fermeture est relativement élevée, ce qui conduit à surdimensionner sa construction. Par ailleurs, il est nécessaire d'utiliser un moteur pour ouvrir et fermer ladite trappe.

Connaissant cet état de l'art, le demandeur a cherché une solution pour concevoir une trémie mobile ou en poste fixe et qui puisse, d'une part, mélanger au moins deux produits, tels que des céréales destinées à l'alimentation animale, et, d'autre part, les distribuer, les décharger et qui puisse être mise en service d'une manière la plus simple possible.

A cet effet, est proposée une trémie mélangeuse et distributrice, comprenant une benne pourvue d'une paroi de fond, un organe de vidange du contenu de la trémie; selon l'invention, la benne est séparée, par l'intermédiaire d'une paroi de séparation, en deux compartiments, le premier compartiment étant destiné à mélanger de la matière en vrac qu'il est susceptible de contenir et le second compartiment étant destiné à vidanger la trémie, la trémie incluant un organe de mélange et de transfert disposé dans le premier compartiment, l'organe de vidange étant disposé dans le second compartiment, la paroi de séparation étant traversée dans sa partie inférieure par un passage permettant le transfert de la matière entre les deux compartiments, un orifice de décharge traversant le second compartiment,

l'organe de mélange et de transfert comprenant un hélicoïde susceptible de tourner à proximité de la paroi de fond et qui, dans un sens de rotation "-" de son axe, met en œuvre le brassage de la matière dans le premier compartiment et, dans son autre sens de rotation "+" met en œuvre, notamment, le transfert de la matière dans le second compartiment au travers dudit passage,

l'organe de vidange comprenant des palettes conçues pour, dans ledit autre même sens de rotation "+" de son axe, décharger au travers de l'orifice de décharge, la matière contenue dans le second compartiment.

Cette construction de la trémie, qu'elle soit en poste mobile ou en poste fixe, lui permet de fonctionner, c'est-à-dire de mélanger son contenu, de le vidanger, avec deux organes respectivement dédiés à ces deux fonctions et sans faire usage d'une ouverture latérale pouvant être ouverte et fermée par une trappe de fermeture reliée à un vérin de manœuvre.

Selon une caractéristique additionnelle de l'invention, des secteurs d'hélicoïdes sont disposés en vis-à-vis de la paroi de séparation et en étant décalés angulairement de la terminaison dudit hélicoïde, leur pas étant dans le même sens que celui dudit hélicoïde, leurs terminaisons approchant la face de la paroi de séparation tournée vers le premier compartiment de mélange, leur permettant de circuler devant le passage pour compléter le travail de la terminaison dudit hélicoïde.

La présence de ces secteurs d'hélicoïdes procure une régularité du transfert de la matière entre le premier compartiment et le second compartiment.

Selon une caractéristique additionnelle de l'invention, un second hélicoïde est disposé à l'intérieur du premier hélicoïde extérieur, leurs pas étant inversés pour mettre en œuvre le brassage à contresens de la matière contenue dans le premier compartiment.

Le travaille coopératif des deux hélicoïdes réalise un meilleur brassage.

Selon une caractéristique additionnelle de l'invention, les palettes sont disposées à la périphérie d'un flasque porté par l'organe de vidange.

En tournant, les palettes soulèvent à tour de rôle de la matière contenue dans le second compartiment pour la déverser au travers de l'orifice de décharge.

Avantageusement, chaque palette comprend une plaque inclinée de deux façons, son plan étant décalé de l'axe de l'organe de vidange et son plan étant incliné dans un plan oblique par rapport à l'axe de l'organe de vidange et qui sont sécants à l'extérieur de la trémie, de sorte que chaque palette peut entraîner la matière, telle une pelle, et dans le sens de rotation "-" de l'organe de vidange, vers le passage traversant la paroi de séparation, afin que la matière que peut contenir le second compartiment puisse être évacuée vers le premier compartiment de mélange.

Dans un sens de rotation de l'organe de vidange, celui-ci refoule la matière contenue dans le second compartiment pour la transférer dans le premier compartiment. Dans l'autre sens de rotation de l'axe de l'organe de vidange, celui-ci évacue le contenu du second compartiment au travers de l'orifice de décharge.

Avantageusement, la plaque de chaque palette est prolongée de deux rebords disposés parallèlement l'un à l'autre et tournés du même côté, les deux rebords s'étendant respectivement à faible distance de la face de la paroi de séparation tournée vers le second compartiment ainsi que de la face interne d'une paroi latérale constitutive de ladite benne.

Pendant le fonctionnement de l'organe de vidange dans l'autre sens de rotation de son axe, chaque palette forme un contenant qui est en mesure de pelleter une quantité de matière contenue dans le second compartiment pour l'évacuer au travers de l'orifice de décharge.

Selon une caractéristique additionnelle de l'invention, une goulotte est raccordée à l'orifice de décharge.

La goulotte permet de dévoyer la décharge du contenu vidangé.

Selon une caractéristique additionnelle de l'invention, l'organe de mélange et de transfert ainsi que l'organe de vidange sont portés par un même arbre commun ou portés respectivement par deux arbres coaxiaux.

Avantageusement, l'arbre de la trémie ou l'un des arbres coaxiaux est relié directement ou indirectement à un engrenage.

L'entraînement à rotation de cet engrenage permet de faire fonctionner la trémie.

L'engin porteur peut ainsi en coopération avec son porte-outil déplacer la trémie et la faire fonctionner.

En variante de réalisation, la trémie a vocation à être utilisée en poste fixe, son arbre ou l'un des arbres coaxiaux est alors relié à un moteur, tel qu'un moteur électrique, un motoréducteur.

Un ensemble comprenant une trémie mélangeuse et distributrice ainsi qu'un porte-outil destiné à être attelé à un engin pour soulever du sol et faire fonctionner ladite trémie, fait également partie de l'invention. Le porte-outil comprend un engrenage destiné à coopérer avec l'engrenage de ladite trémie pour entraîner à rotation son organe de mélange et de transfert ainsi que son organe de vidange.

Le fonctionnement du moteur met en œuvre dans ses deux sens de rotation, le fonctionnement de la trémie pour, d'une part, mélanger son contenu et, d'autre part, la vidanger.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un porte-outil et d'une trémie mélangeuse et distributrice destinée à être attelée au porte-outil selon l'invention,
la Fig. 2a représente une vue en perspective avant d'un porte-outil destiné à atteler une trémie mélangeuse et distributrice selon l'invention,
la Fig. 2b représente une vue en perspective arrière d'un porte-outil destiné à atteler une trémie mélangeuse et distributrice selon l'invention,
la Fig. 3 représente une vue en perspective arrière d'une trémie mélangeuse et distributrice selon l'invention,
la Fig. 4 représente une vue en perspective avant d'une trémie mélangeuse et distributrice selon l'invention,
la Fig. 5 représente une vue de dessus d'une trémie mélangeuse et distributrice selon l'invention,
la Fig. 6 représente une vue en coupe longitudinale d'une trémie mélangeuse et distributrice selon l'invention,
la Fig. 7 représente une vue avant d'une trémie mélangeuse et distributrice et dont une paroi latérale a été retirée selon l'invention,
la Fig. 8 représente une représentation schématique en vue de dessus d'une première variante de réalisation d'une trémie mélangeuse et distributrice selon l'invention,
la Fig. 9 représente une représentation schématique en vue de dessus d'une deuxième variante de réalisation d'une trémie mélangeuse et distributrice selon l'invention,
la Fig. 10 représente une représentation schématique en vue de dessus d'une troisième variante de réalisation d'une trémie mélangeuse et distributrice selon l'invention,
la Fig. 11 représente une vue schématique en coupe d'une quatrième variante de réalisation d'une trémie mélangeuse et distributrice destinée à être utilisée en poste fixe selon l'invention et,
la Fig. 12 représente une vue schématique en coupe d'une cinquième variante de réalisation d'une trémie mélangeuse et distributrice destinée à être utilisée en poste fixe selon l'invention.

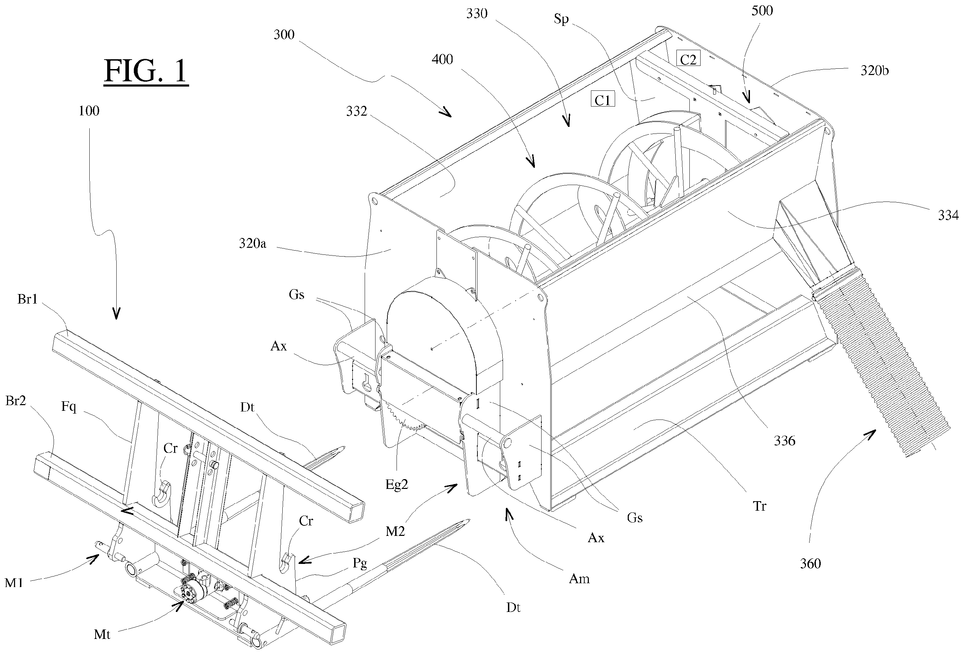

La trémie mélangeuse et distributrice 300, présentée sur la Fig. 1, est un contenant destiné à être chargé de matières en vrac, par exemple des céréales utilisées comme aliments pour des animaux, tels que du soja, du blé aplati, de l'orge, de la mélasse, de la farine. La trémie permet de mélanger une sélection de ces céréales en quantités dosées et de les distribuer dans des mangeoires. Un exemple d'aliments pour des animaux ruminants contient un mélange de maïs, de blé aplati et d'un complément minéral.

La trémie mélangeuse et distributrice 300 est destinée à être attelée à un porte-outil 100. Le porte-outil 100, présenté sur la Fig. 1, est destiné à être attelé à un engin pour soulever du sol et faire fonctionner ladite trémie. Il est présenté dans sa position normale d'utilisation. L'engin est par exemple pourvu d'un bras de levage à l'extrémité duquel il convient de fixer le porte-outil, un tracteur dont le système de relevage hydraulique à trois points sert à fixer ledit porte-outil.

La trémie mélangeuse et distributrice 300 est attelée sur le porte-outil 100 préalablement attelé sur l'engin porteur. Celui-ci peut ainsi la soulever et la déplacer sur un lieu de chargement pour être chargée de matières en vrac. Elle est ensuite transportée sur le lieu où sont installées les mangeoires, et son contenu est déversé dans celles-ci. L'engin porteur peut également mettre en œuvre, d'une part, le mélange du contenu de la trémie 300, préférentiellement pendant son transport et d'autre part, sa vidange, dans les mangeoires.

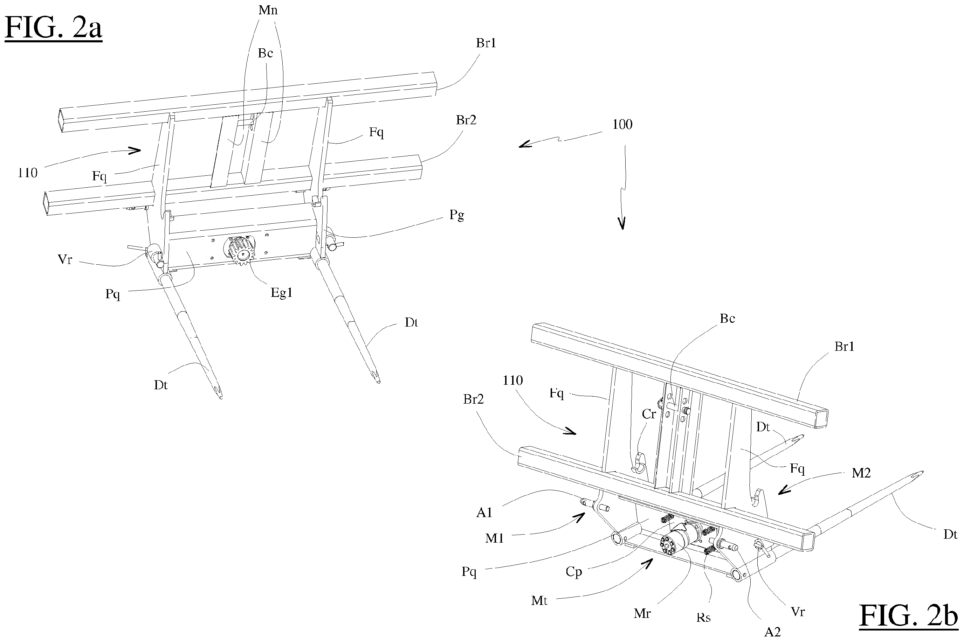

Sur les Figs. 2a et 2b, le porte-outil 100 comprend un châssis 110 supportant au moins un doigt Dt destiné à soulever la trémie mélangeuse et distributrice 300 et/ou la positionner par rapport au porte-outil 100. Ce porte-outil convient également pour faire fonctionner un autre accessoire, notamment une dérouleuse, une dérouleuse pailleuse, une trémie de distribution. Quand l'accessoire est une dérouleuse, une dérouleuse pailleuse, ledit doigt sert alors à piquer une botte pour pouvoir la soulever et la transporter dans la dérouleuse, la dérouleuse pailleuse et le châssis portent au moins une barre Br pare-botte horizontale formant, notamment, une butée pour celle-ci. Le châssis est encore pourvu d'au moins un moyen d'attelage M1 avec l'engin porteur, un moyen d'accouplement M2 avec la trémie, et un moyen d'entraînement Mt capable de faire fonctionner au moins un organe de la trémie susceptible d'être accouplée avec le porte-outil 100.

Le châssis 110 comprend deux flasques Fq verticaux et parallèles entre eux et qui sont réunis par les deux barres Br1 et Br2 qui s'étendent vers l'extérieur, ainsi que par l'intermédiaire d'une plaque Pq, par exemple fabriquée dans une feuille de tôle et sur laquelle est fixé le moyen d'entraînement Mt. Deux doigts Dt sont également fixés sur les bords inférieurs des deux flasques Fq en s'étendant horizontalement dans une direction quasi perpendiculaire aux deux barres Br. Les doigts Dt sont montés, sur ces Figs. 2, dans deux fourreaux et sont fixés par des goupilles de manière à permettre leur remplacement. La plaque de tôle Pq est formée de plusieurs plis pour renforcer la structure du châssis 110. Elle comprend ainsi un pli inférieur formant retour et qui relie les deux fourreaux. Deux tasseaux sont fixés sous ce pli inférieur et servent d'assise au porte-outil pour qu'il puisse reposer sur le sol.

Au moins un montant Mn relie verticalement les deux barres Br entre les deux flasques Fq. Deux montants Mn, présentant une géométrie en équerre, sont interposés sur ces Figs. 2 entre les deux barres Br. Le moyen d'attelage M1 avec l'engin est destiné à solidariser le porte-outil 100 sur le relevage trois points de l'engin porteur. Il comprend deux axes A1 et A2 traversant respectivement les deux flasques Fq et une série de trous traversant les deux montants Mn et dont une paire est utilisée pour réceptionner une broche Bc de fixation d'un vérin mécanique au troisième point de relevage. Un second moyen d'attelage peut être implanté sur le châssis 110, pour atteler le porte-outil 100, par exemple sur l'extrémité du bras manipulateur d'un engin de levage, communément appelé « télescopique ». Les barres Br sont à cet effet utilisées pour fixer ce second moyen d'attelage sur l'engin porteur. Ce moyen d'attelage, démontable, est installé en option, à la demande de l'acheteur. Il se compose, à cet effet, de ferrures qui peuvent être bridées sur les deux barres Br.

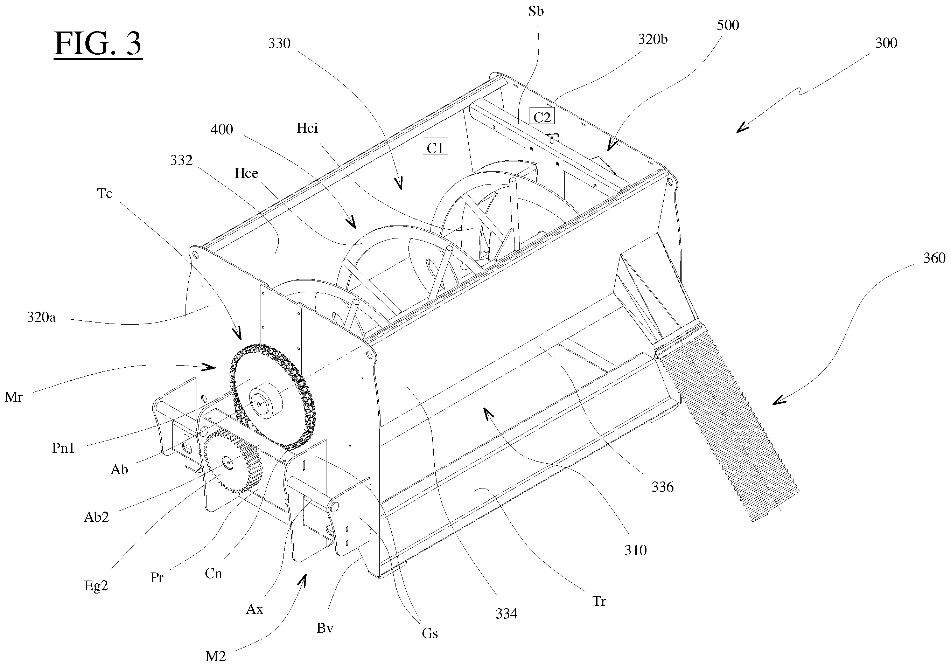

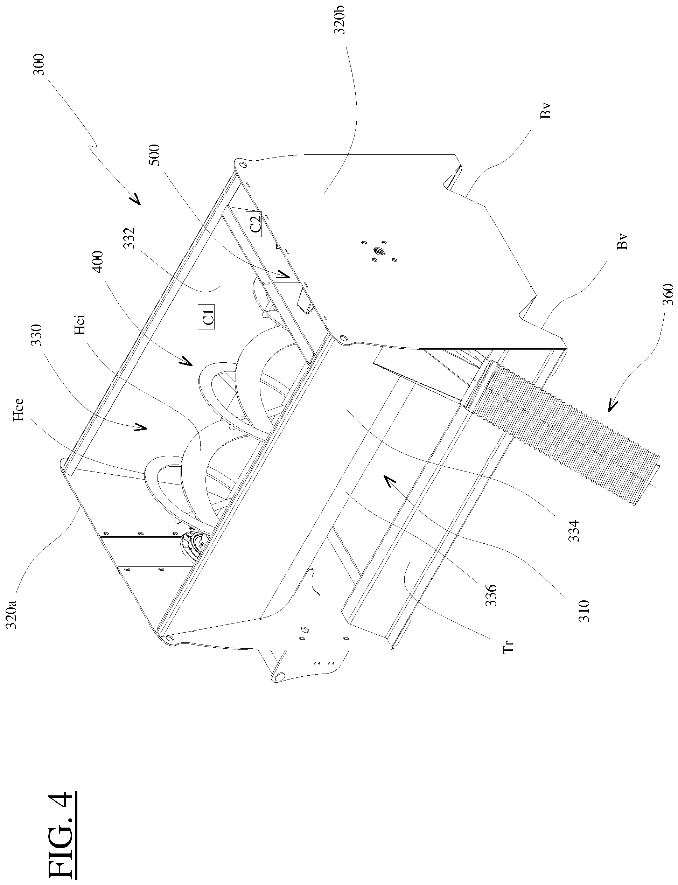

Sur les Figs. 3 et 4, la trémie mélangeuse et distributrice 300 comprend un châssis 310 contenant une benne de chargement 330 de la matière, un organe de mélange et de transfert 400, un organe de vidange 500 de ladite benne et un moyen d'entraînement à rotation Mr des organes 400 et 500, constitutif d'une partie complémentaire du moyen d'accouplement, d'une goulotte 360 de distribution de la matière vidangée.

Le châssis 310 comprend deux parois latérales 320a et 320b réunies en partie basse par deux traverses Tr qui débouchent au travers de deux embrèvements Bv creusant le bord inférieur des deux parois latérales 320. Ces deux traverses Tr servent à réceptionner respectivement les deux doigts du porte-outil afin que la trémie puisse être soulevée par celui-ci. Les deux traverses Tr ou pour le moins les deux embrèvements Bv présentent en section une géométrie en V retourné permettant ainsi de positionner la trémie 300 sur les doigts du porte-outil pendant son levage, les doigts, de préférence de section ronde, ayant préalablement été enfilés dans leurs traverses respectives. Deux tubes peuvent encore être utilisés en remplacement des deux traverses pour réceptionner les doigts et permettre le positionnement de la trémie par rapport au porte-outil. Le positionnement est relatif, c'est-à-dire que c'est la trémie qui se déplace latéralement pendant le levage du porte-outil et/ou c'est le porte-outil qui se déplace latéralement pendant son levage.

La benne de chargement 330 est formée de deux parois transversales 332 et 334 présentant en section une géométrie en V délié et qui sont réunies par une paroi de fond arrondie 336. Les deux bords latéraux de ces parois transversales sont respectivement fixés, par exemple par un cordon de soudure, sur les faces internes des deux parois latérales 320a et 320b, délimitant ainsi le volume de la benne 330. Les deux parois transversales 332 et 334 ainsi que la paroi arrondie 336 sont formées dans une seule et même feuille de métal et qui est cambrée.

Sur la Fig. 1, le moyen d'accouplement M2 se compose d'un attelage mécanique Am capable de fixer la trémie 300 sur le porte-outil 100 pour qu'elle puisse être portée et déplacée par celui-ci et d'une structure particulière du moyen d'entraînement Mt du porte-outil 100 vis-à-vis de la trémie 300, et qui peut être activé pendant l'attelage de la trémie de sorte que le porte-outil 100 est en mesure de faire fonctionner dans un sens ou dans l'autre, l'organe de mélange et de transfert 400 et l'organe de vidange 500 de la trémie 300, à l'issue de son accouplement.

L'attelage mécanique Am comprend une paire de crochets Cr fixés sur les flasques Fq du porte-outil 100 et qui peuvent respectivement soulever deux axes Ax solidaires de la paroi latérale 320b de la trémie 300. Les axes Ax sont déportés de la paroi latérale 320b par l'intermédiaire de deux paires de goussets Gs, pour permettre leur accrochage par les crochets. Les traverses Tr susceptibles d'être portées par les doigts Gt font aussi partie de l'attelage mécanique. Cependant, les doigts Dt servent, dans l'invention et en première fonction, à positionner la trémie en vis-à-vis du porte-outil et le cas échéant à porter celle-ci en complément ou non des crochets Cr. Par positionnement en vis-à-vis il faut comprendre un positionnement relatif en hauteur et latéralement de la trémie 300 par rapport au porte-outil 100.

Ces composants, axes Ax, traverses Tr, forment au moins partiellement la partie de l'attelage mécanique Am porté par la trémie 300 pour coopérer avec la partie de l'attelage mécanique correspondant porté par le porte-outil 100.

On remarquera que les crochets et les axes pourraient être inversés, c'est-à-dire que les deux axes solidaires du porte-outil sont retenus pendant son soulèvement dans les deux crochets solidaires de la trémie.

Le moyen d'entraînement Mt comprend, sur les Figs. 2, un moteur Mr et avantageusement un moteur hydraulique susceptible d'être alimenté, par l'intermédiaire de flexibles de raccordement, par une pompe hydraulique dont est pourvu l'engin porteur du porte-outil 100. Le moteur Mr est fixé d'un côté de la plaque Pq. Le moyen d'entraînement Mt comprend encore, sur les Figs. 2, un engrenage Eg1 tenu par l'arbre du moteur Mr.

Le second engrenage Eg2, visible sur la Fig. 1, est agencé, comme cela a été décrit précédemment, pour pouvoir entraîner à rotation, l'organe de mélange et de transfert 400 ainsi que l'organe de vidange 500 de la trémie 300.

Les deux engrenages sont du type à axes parallèles pour faciliter leur engrènement mutuel. Les deux engrenages sont du type à denture droite, ce qui ne génère pas de forces avec des composantes axiales sur les arbres porteurs.

Sur les Figs. 2, le premier engrenage Eg1 est tenu par l'arbre du moteur Mr qui traverse la plaque Pq de sorte qu'il est disposé de l'autre côté de la plaque et plus précisément du côté des doigts Dt pour être tourné vers la trémie à accoupler.

De façon plus précise, le moteur Mr est fixé sur une contreplaque Cp assemblée à l'arrière de la plaque Pq et qui est maintenue plaquée contre elle par l'intermédiaire d'un moyen de rappel, tel qu'au moins un ressort Rs. Quatre ressorts disposés aux encoignures de la plaque sont mis en œuvre sur la Fig. 2b. Les ressorts sont précontraints par des vis de fixation de la contreplaque Cp sur la plaque Pq. Ce montage flottant protège l'arbre du moteur Mr des chocs éventuels appliqués sur l'engrenage Eg1.

Le moteur Mr est fixé sur la plaque Pq de sorte que le premier engrenage Eg1 qu'il porte puisse être positionné en dessous du second engrenage Eg2, quand la trémie 300 est accouplée au porte-outil 100.

Un autre moyen de guidage du porte-outil 100 vis-à-vis de la trémie 300 peut aussi agir, pendant l'attelage, dans une direction de levage du porte-outil et qui est perpendiculaire à celle des axes des deux engrenages ou pour le moins à l'axe du premier engrenage. Il comprend, sur la Fig. 1, la paire de flasques Fq dont les rebords situés sous les crochets Cr constituent une paroi de guidage Pg qui glisse verticalement ou dans une direction quasi verticale, le long de la paroi latérale 320a porteuse du second engrenage Eg2, pendant l'attelage.

Compte tenu que la trémie de mélange et de distribution 300 est suspendue sur le porte-outil 100, il n'est pas indispensable de les verrouiller mutuellement. Cependant, au moins un verrou Vr, visible sur les Figs. 2 peut être utilisé. Il se compose d'un doigt rotatif et escamotable monté à coulissement dans un fourreau solidaire du porte-outil 100 et qui est terminé par un ergot perpendiculaire. Le doigt peut passer au travers d'un logement réalisé dans la paroi latérale porteuse du second engrenage et qui est élargi localement par une fente au travers de laquelle l'ergot peut passer puis ensuite tourner pour réaliser le verrouillage.

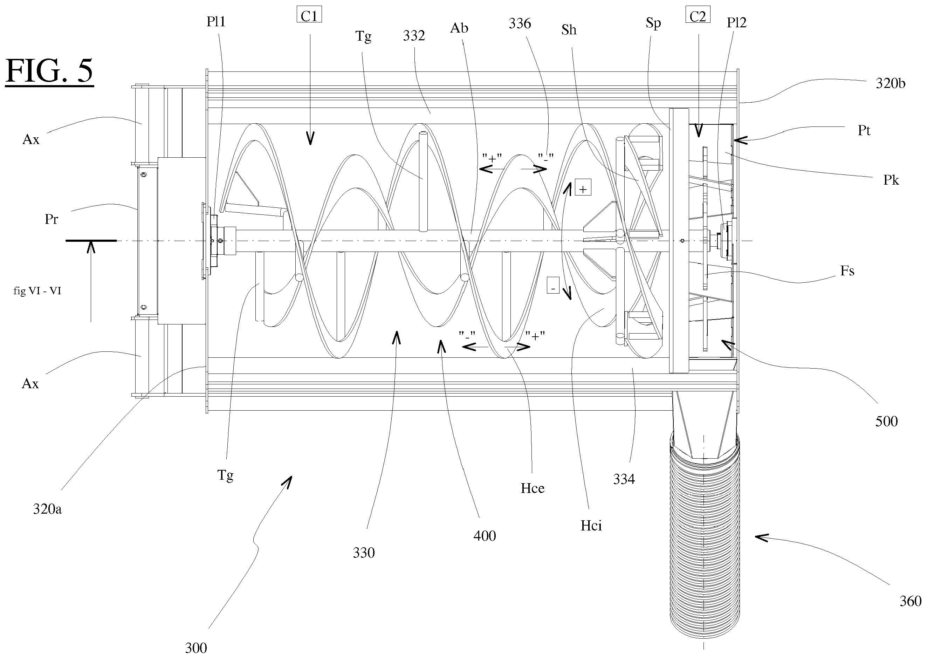

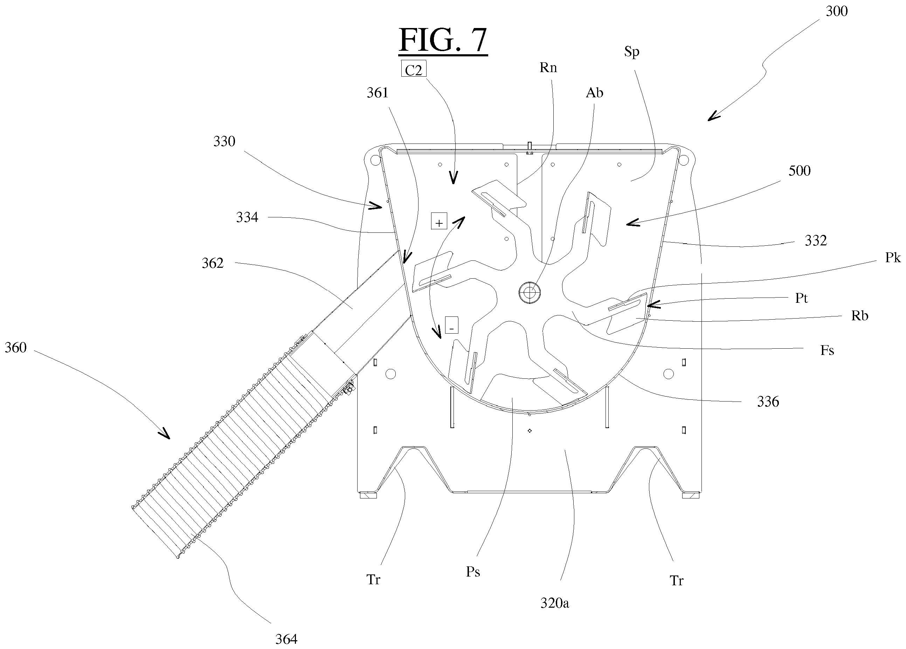

Sur la Fig. 5, la benne 330 est séparée en deux compartiments C1 et C2, par l'intermédiaire d'une paroi de séparation Sp qui s'étend perpendiculairement à la paroi de fond 336. Les deux compartiments C1 et C2 sont juxtaposés sur cette Fig. 5. Le premier compartiment C1 sert au mélange des matières contenues dans celui-ci. Le second compartiment C2 sert à vidanger le mélange. La goulotte 360 est, à cet effet, raccordée à ce second compartiment C2 au travers d'un orifice de décharge. Sur la Fig. 7, l'orifice de décharge porte la référence 361. Il traverse préférentiellement la paroi transversale 334. Le raccordement est réalisé un peu au-dessus de la réunion de la paroi transversale 334 avec la paroi de fond 336. La paroi de séparation Sp est disposée dans la benne 330 en étant positionnée de sorte que le compartiment C1 de mélange est beaucoup plus volumineux que le compartiment C2 de vidange.

L'organe de mélange et de transfert 400 et l'organe de vidange 500 sont portés par un même arbre Ab qui traverse longitudinalement les deux compartiments C1 et C2, parallèlement à la paroi de fond 336. Une extrémité de l'arbre Ab est tenue libre à rotation au travers d'un premier palier Pl1 fixé sur la paroi latérale 320a, alors que son autre extrémité est tenue dans un second palier Pl2 fixé sur la paroi latérale 320b. L'arbre Ab traverse la paroi de séparation Sp, préférentiellement au travers d'une rainure qui s'étend verticalement au-dessus de la position de l'arbre Ab. Cette rainure porte sur la Fig. 7, la référence Rn et sert à simplifier le montage de l'organe de l'arbre Ab portant l'organe de mélange et de transfert 400 et l'organe de vidange 500. Cette rainure est ensuite masquée par sabot Sb visible sur la Fig. 3 et qui présente une géométrie en T.

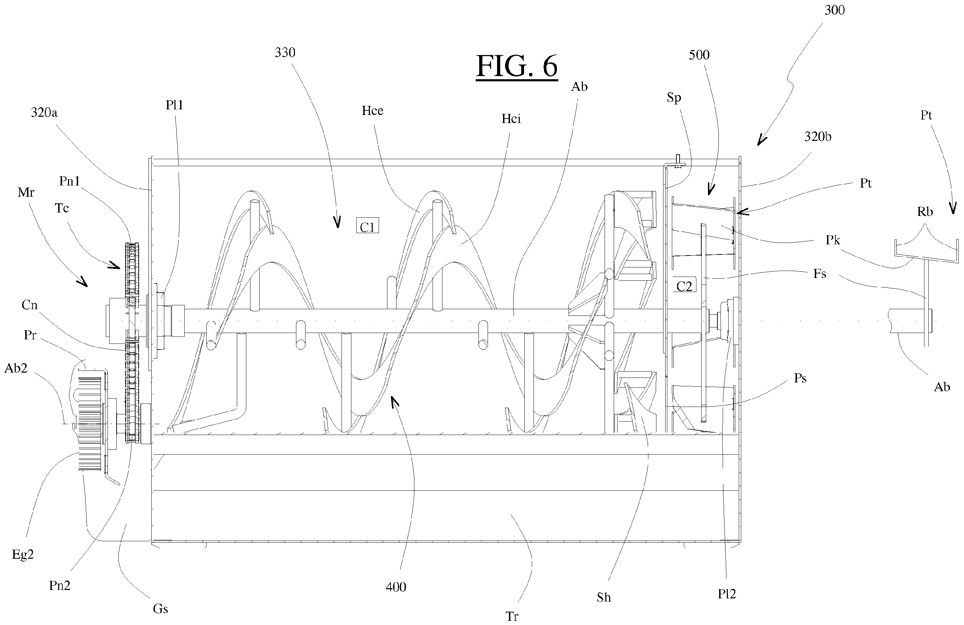

Sur la Fig. 3, l'arbre Ab porte, dans le volume du compartiment C1, l'organe de mélange et de transfert 400 et qui comprend deux hélicoïdes Hc, l'un extérieur Hce destiné au brassage et au transfert de la matière dans le compartiment de vidange C2 et l'autre intérieur Hci, c'est-à-dire disposé à l'intérieur de l'hélicoïde extérieur Hce pour accroître l'efficacité du brassage de la matière contenue dans le compartiment C1. Les deux hélicoïdes Hc présentent deux pas inversés afin que, pendant la rotation dans un sens de l'organe de mélange et de transfert 400, indiqué par la flèche "-" sur la Fig.5, l'hélicoïde intérieur Hci puisse déplacer les matières en direction de la paroi de séparation Sp alors que l'hélicoïde extérieur Hce puisse déplacer les matières en direction de la paroi latérale 320a de la benne 330, pour mettre en œuvre le brassage des matières. Les deux hélicoïdes Hc sont décalés angulairement, par exemple de 90° ou de 180°, pour faire fluer la matière vers l'extérieur, c'est-à-dire en direction des parois transversales 332, 334 et 336 de la benne 330 pour améliorer le brassage ou réduire sa durée. La largeur de l'hélicoïde intérieur Hci est plus grande que celle de l'hélicoïde extérieur Hce de sorte que leurs surfaces de travail puissent être pratiquement équivalentes. Les deux hélicoïdes Hc sont respectivement reliés à l'arbre Ab par l'intermédiaire de tiges Tg. L'hélicoïde extérieur Hce s'étend à proximité de la paroi de fond arrondie 336 pour mettre en œuvre le transfert du contenu du compartiment C1 vers le compartiment C2 et ceci dans l'autre sens de rotation "+" de l'axe de l'arbre Ab. Le travail conjoint des deux hélicoïdes Hce et Hci continue à mettre en œuvre le brassage. Dans une variante de construction non représentée, au moins l'hélicoïde extérieur est dépourvu d'arbre support. Il est fixé à ses deux extrémités sur deux arbres courts et autour desquels il tourne. Les deux hélicoïdes Hce et Hci visibles sur les Figs. 5 et 6 sont continus. Chaque hélicoïde est fabriqué dans une bande de matière conformée en hélicoïde. Dans une variante de réalisation, non représentée, chaque hélicoïde est constitué d'une succession de portions d'hélicoïdes agencées de manière discontinue mais dont la géométrie des différentes portions forme, avec les parties manquantes, un hélicoïde. Dans l'invention, le terme hélicoïde englobe un hélicoïde continu et un hélicoïde discontinu.

Sur la Fig. 7, la paroi de séparation Sp qui rejoint les deux parois transversales 332, 334, ainsi que la paroi de fond 336 constitutives de la benne, est cependant traversée dans sa partie inférieure, c'est-à-dire au niveau de la paroi de fond 336, d'un passage Ps permettant le transfert de la matière entre le compartiment C1 et le compartiment C2 et réciproquement.

Sur les Figs. 5 et 6, la terminaison de l'hélicoïde extérieur Hce approche la face de la paroi de séparation Sp tournée vers le compartiment C1 de mélange. Elle peut ainsi circuler devant le passage Ps. Des secteurs d'hélicoïdes Sh complètent le travail de la terminaison de l'hélicoïde extérieur Hce. Ils sont ainsi disposés en vis-à-vis de la paroi de séparation Sp et en étant décalés angulairement de la terminaison de l'hélicoïde extérieur Hce. Leur pas est dans le même sens que celui de l'hélicoïde extérieur Hce. Leurs terminaisons approchent également la face de la paroi de séparation Sp tournée vers le compartiment C1 de mélange, leur permettant de circuler devant le passage Ps.

Sur les Figs. 5, 6 et 7, l'organe de vidange 500 est fixé sur la partie de l'arbre Ab qui traverse le compartiment C2 de vidange. L'organe de vidange 500 est destiné à permettre, dans un sens de rotation, indiqué par la flèche "-", le refoulement de la matière contenue, le cas échéant, dans le compartiment C2 vers le compartiment C1 et au travers du passage Ps et dans son autre sens de rotation de l'axe de l'arbre Ab indiqué par la flèche "+" sur la Fig. 7, la vidange du contenu du compartiment C2, au travers de la goulotte 360. L'organe de vidange 500 comprend un flasque Fs portant à sa périphérie des palettes Pt. Le flasque Fs est de préférence ajouré en forme d'étoiles délimitant ainsi des branches et qui portent respectivement à leurs extrémités libres lesdites palettes Pt.

Chaque palette Pt comprend une plaque Pk qui est inclinée de deux façons. Son plan est décalé de l'axe de l'arbre Ab et son plan est incliné dans un plan oblique par rapport à l'axe de l'arbre Ab et qui sont sécants à l'extérieur de la trémie 300. Chaque palette Pt peut ainsi entraîner la matière, telle une pelle, et dans le sens de rotation "-" de l'organe de vidange 500, vers le passage Ps traversant la paroi de séparation Sp. La matière que peut contenir le compartiment C2 de vidange est évacuée vers le compartiment C1 de mélange.

Dans l'invention, le travail de l'hélicoïde extérieur Hce et des palettes Pt concourt, pendant le mélange de la matière dans le compartiment de mélange C1, à procurer une étanchéité entre les deux compartiments C1 et C2 au niveau du passage Ps, de sorte que le compartiment de vidange C2 demeure quasiment vide.

La plaque Pk de chaque palette Pt est également prolongée de deux rebords Rb disposés parallèlement l'un à l'autre et tournés du même côté. Ils s'étendent respectivement à faible distance de la face de la paroi de séparation Sp tournée vers le compartiment C2 ainsi que de la face interne de la paroi latérale 320b. Pendant le fonctionnement de l'organe de vidange dans l'autre sens de rotation "+" de l'axe de l'arbre Ab, chaque palette Pt forme un contenant qui est en mesure de prendre de la matière dans le compartiment C2 pour la soulever et l'évacuer au travers de la goulotte 360.

Sur la Fig. 7, la goulotte 360 se compose d'un manchon 362 qui est raccordé avec l'orifice de décharge 361, préférentiellement au travers de la paroi transversale 334 et dans sa partie débouchant dans le second compartiment C2 et qui se prolonge de son autre extrémité et dans une direction oblique orientée vers le bas par une section tubulaire souple 364 fabriquée dans une matière pratiquement incassable.

Sur les Figs. 3 et 6, l'extrémité de l'arbre Ab tenue dans la paroi latérale 320a se prolonge au travers du palier Pl1 et est reliée à l'engrenage Eg2 destiné à faire fonctionner les organes 400 et 500 quand la trémie 300 est attelée sur le porte-outil de l'engin porteur. Sur ces Figs. 3 et 6, l'extrémité de l'arbre est reliée à l'engrenage Eg2, par l'intermédiaire d'une transmission Tc par chaîne et pignons formant réducteur de vitesse.

La transmission par chaîne Tc comprend un premier pignon Pn1 monté sur ladite extrémité de l'arbre Ab, un second pignon Pn2 monté sur un autre arbre Ab2 parallèle au premier arbre Ab, les deux pignons étant réunis par l'intermédiaire d'une chaîne Cn. L'engrenage Eg2 est monté sur le second arbre Ab2. Ce dernier est monté par l'intermédiaire de deux roulements respectivement fixés sur la paroi latérale 320a et une plaque de renfort Pr fixée entre deux goussets Gs.

Le fonctionnement de la trémie 300 de l'invention se présente de la manière suivante. Le conducteur de l'engin attelle, le cas échéant, le porte-outil 100 sur l'engin de levage. Il attelle la trémie mélangeuse et distributrice 300 sur le porte-outil 100 de l'engin porteur. Il engage pour cela les doigts Dt dans les traverses Tr de la trémie mélangeuse et distributrice 300 en les enfilant au travers des embrèvements Bv, et avance l'engin porteur pour mettre en butée le porte-outil 100 contre la trémie mélangeuse et distributrice 300. Il commande ensuite le soulèvement du porte-outil 100 provoquant ainsi l'attelage de la trémie mélangeuse et distributrice 300 et son accouplement sur ledit porte-outil. La trémie mélangeuse et distributrice 300 est déplacée sous un silo ou plusieurs silos contenant des céréales et une quantité de céréales est déversée dans sa benne de chargement 330. La trémie est ensuite déplacée en direction de la mangeoire, pendant ce temps le conducteur actionne la commande qui provoque la rotation de l'arbre Ab suivant son sens "-". L'organe de mélange et de transfert 300 mélange alors les céréales contenues dans le compartiment C1. Les céréales qui sont susceptibles de s'écouler dans le second compartiment au travers du passage Ps sont renvoyées dans le compartiment C1 par le travail des palettes Pt. Pour vidanger le contenu de la trémie 300 dans une mangeoire, le conducteur actionne la commande qui provoque la rotation de l'arbre Ab suivant son sens "+". L'hélicoïde extérieur Hce ainsi que les secteurs d'hélicoïdes Sh transfèrent les céréales dans le compartiment C2 en traversant le passage Ps. Les palettes Pt écopent les céréales et les déversent au travers de la goulotte 360, suivant un débit régulier.

La trémie mélangeuse distributrice 300 de l'invention est en mesure de mettre en œuvre, d'une part, le mélange de matières en vrac telles que des céréales et, d'autre part, leur distribution et ceci uniquement avec un simple moyen d'entraînement à rotation à double sens de rotation.

La trémie mélangeuse distributrice 300 de l'invention est dépourvue d'ouverture traversant une paroi latérale de sa benne et d'une trappe de fermeture manœuvrée par un vérin ou un moteur.

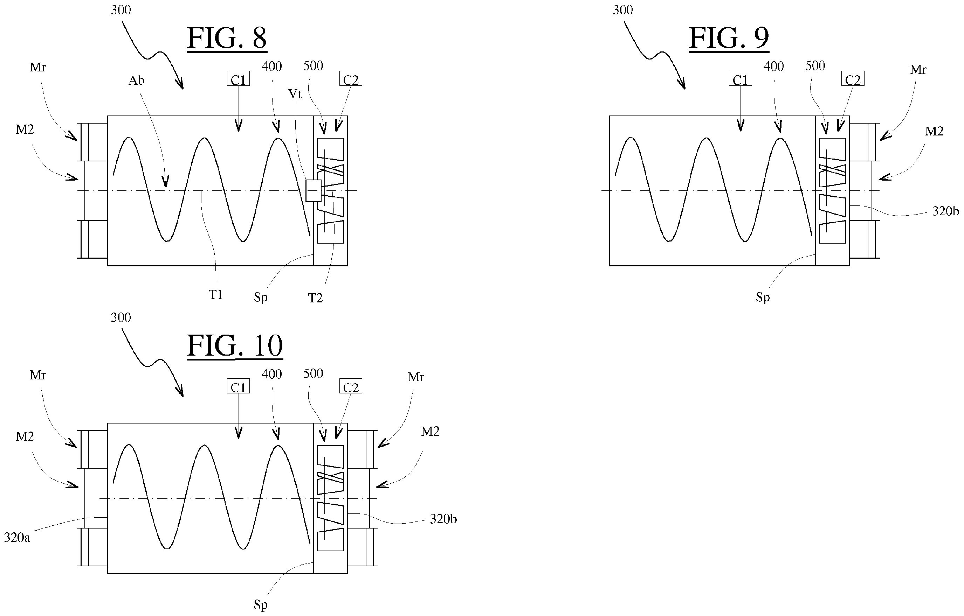

Dans une première variante de réalisation présentée sur la Fig. 8, l'arbre Ab d'entraînement de l'organe de mélange et de transfert 400 et de l'organe de vidange 500 est constitué de deux composants distincts T1 et T2 coaxiaux et qui sont reliés par l'intermédiaire d'un variateur de vitesse Vt tel qu'un train épicycloïdal et qui est destiné à faire tourner plus vite l'organe de vidange 500 que l'organe de mélange et de transfert 400. Le compartiment C2 est vidé plus rapidement qu'il ne se remplit. On notera par ailleurs qu'un manchon mécanique peut réunir les deux parties d'arbre T1 et T2.

Dans la trémie présentée sur les Figs. 1 et 3 à 7, le moyen d'attelage M2 ainsi que le moyen d'entraînement à rotation Mr de la trémie 300 sont disposés du côté de la paroi latérale 320a qui borde le compartiment C1.

Dans une seconde variante de réalisation présentée sur la Fig. 9, le moyen d'attelage M2 ainsi que le moyen d'entraînement à rotation Mr des organes 400 et 500 de la trémie 300 sont disposés du côté de l'autre paroi latérale 320b et qui est celle qui borde le compartiment C2. Lorsque la trémie 300 est portée par le porte-outil d'un engin de levage, elle peut vidanger la matière de l'autre côté.

Dans une troisième variante de réalisation présentée sur la Fig. 10, le moyen d'attelage M2 ainsi que le moyen d'entraînement à rotation Mr de la trémie 300 sont disposés du côté du compartiment C2 ainsi que du côté du compartiment C1, autorisant un déversement de la matière des deux côtés de l'engin porteur par choix du côté de l'attelage de la trémie 300.

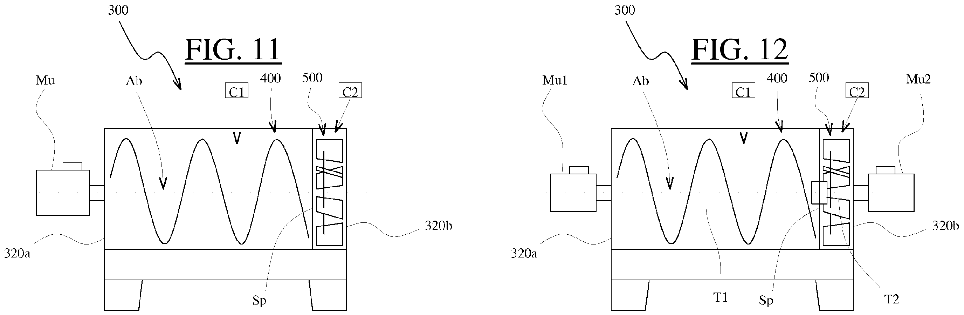

Dans une quatrième variante de réalisation, représentée sur la Fig. 11, la trémie mélangeuse et distributrice 300 est installée en poste fixe pour mélanger au moins deux matières en vrac et les vidanger. Elle est en principe dépourvue d'un moyen d'attelage avec un engin porteur. Le moyen d'entraînement à rotation de l'arbre Ab supportant l'organe de mélange et de transfert 400 ainsi que l'organe de vidange 500 est un moteur Mu, notamment un moteur électrique, un motoréducteur. La trémie 300 peut ainsi être utilisée comme une mélangeuse/distributrice d'aliments pour animaux en étant montée de façon stationnaire sur pieds. Les aliments sont mélangés, puis déversés, par exemple dans un godet désileur, dans des seaux. Le moyen d'entraînement à rotation peut être commandé par l'intermédiaire d'une télécommande pour lancer un cycle de mélange d'une durée convenue et pour vidanger à la demande le contenu du second compartiment. Des capteurs de masse interposés entre la trémie 300 et ses pieds sont utilisés pour mesurer la masse d'aliments que contient la trémie afin d'informer l'utilisateur de la trémie.

Là encore, il n'est pas nécessaire de prévoir une ouverture dans une paroi latérale et sa trappe de fermeture ainsi que son moyen d'actionnement.

Dans une cinquième variante de réalisation présentée sur la Fig. 12, l'arbre Ab de la trémie 300 en poste fixe est constitué de deux composants distincts T1 et T2 respectivement entraînés à rotation par l'intermédiaire de deux moteurs Mu1 et Mu2. Ceux-ci sont respectivement fixés sur les deux parois latérales 320a et 320b. Deux paliers fixés sur les deux faces de la paroi de séparation Sp tiennent libres à rotation les extrémités libres des deux arbres T1 et T2.

## Revendications

1. Trémie mélangeuse et distributrice (300), comprenant une benne (330) pourvue d'une paroi de fond (336), un organe de vidange du contenu de la trémie, **caractérisée en ce que** la benne (330) est séparée, par l'intermédiaire d'une paroi de séparation (Sp), en deux compartiments, le premier compartiment (C1) étant destiné à mélanger de la matière en vrac qu'il est susceptible de contenir et le second compartiment (C2) étant destiné à vidanger la trémie, la trémie incluant un organe de mélange et de transfert (400) disposé dans le premier compartiment (C1), l'organe de vidange (500) étant disposé dans le second compartiment (C2), la paroi de séparation (Sp) étant traversée dans sa partie inférieure par un passage (Ps) permettant le transfert de la matière entre les deux compartiments (C1 et C2), un orifice de décharge (361) traversant le second compartiment (C2),
l'organe de mélange et de transfert (400) comprenant un hélicoïde (Hce) susceptible de tourner à proximité de la paroi de fond (336) et qui, dans un sens de rotation ("-") de son axe, met en œuvre le brassage de la matière dans le premier compartiment (C1) et, dans son autre sens de rotation ("+") met en œuvre, notamment, le transfert de la matière dans le second compartiment (C2) au travers dudit passage (Ps),
l'organe de vidange (500) comprenant des palettes (Pt) conçues pour, dans ledit autre même sens de rotation ("+") de son axe, décharger au travers de l'orifice de décharge (361), la matière contenue dans le second compartiment (C2).

2. Trémie mélangeuse et distributrice (300) selon la revendication 1, **caractérisée en ce que** des secteurs d'hélicoïdes (Sh) sont disposés en vis-à-vis de la paroi de séparation (Sp) et en étant décalés angulairement de la terminaison dudit hélicoïde (Hce), leur pas étant dans le même sens que celui dudit hélicoïde (Hce), leurs terminaisons approchant la face de la paroi de séparation (Sp) tournée vers le premier compartiment (C1) de mélange, leur permettant de circuler devant le passage (Ps) pour compléter le travail de la terminaison dudit hélicoïde (Hce).

3. Trémie mélangeuse et distributrice (300) selon la revendication 1 ou 2, **caractérisée en ce qu'**un second hélicoïde (Hci) est disposé à l'intérieur du premier hélicoïde extérieur (Hce), leurs pas étant inversés pour mettre en œuvre le brassage à contresens de la matière contenue dans le premier compartiment (C1).

4. Trémie mélangeuse et distributrice (300) selon la revendication 1, 2 ou 3, **caractérisée en ce que** les palettes (Pt) sont disposées à la périphérie d'un flasque (Fs) porté par l'organe de vidange (500).

5. Trémie mélangeuse et distributrice (300) selon la revendication 4, **caractérisée en ce que** chaque palette (Pt) comprend une plaque (Pk) inclinée de deux façons, son plan étant décalé de l'axe de l'organe de vidange (500) et son plan étant incliné dans un plan oblique par rapport à l'axe de l'organe de vidange (500) et qui sont sécants à l'extérieur de la trémie (300), de sorte que chaque palette (Pt) peut entraîner la matière, telle une pelle, et dans le sens de rotation ("-") de l'organe de vidange (500), vers le passage (Ps) traversant la paroi de séparation (Sp), afin que la matière que peut contenir le second compartiment (C2) puisse être évacuée vers le premier compartiment (C1) de mélange.

6. Trémie mélangeuse et distributrice (300) selon la revendication 5, **caractérisée en ce que** la plaque (Pk) de chaque palette (Pt) est prolongée de deux rebords (Rb) disposés parallèlement l'un à l'autre et tournés du même côté, les deux rebords (Rb) s'étendant respectivement à faible distance de la face de la paroi de séparation (Sp) tournée vers le second compartiment (C2) ainsi que de la face interne d'une paroi latérale (320b) constitutive de ladite benne (330).

7. Trémie mélangeuse et distributrice (300) selon l'une quelconque des revendications précédentes, **caractérisée en ce qu'**une goulotte (360) est raccordée à l'orifice de décharge (361).

8. Trémie mélangeuse et distributrice (300) selon l'une quelconque des revendications précédentes, **caractérisée en ce que** l'organe de mélange et de transfert (400) ainsi que l'organe de vidange (500) sont portés par un même arbre (Ab) commun ou portés respectivement par deux arbres coaxiaux (T1, T2).

9. Trémie mélangeuse et distributrice (300) selon la revendication 8, **caractérisée en ce que** son arbre (Ab) ou l'un des arbres coaxiaux (T1, T2) est relié directement ou indirectement à un engrenage (Eg2).

10. Trémie mélangeuse et distributrice (300) selon la revendication 8, la trémie étant destinée à être utilisée en poste fixe, **caractérisée en ce que** son arbre (Ab) ou l'un des arbres coaxiaux (T1, T2) est relié à un moteur (Mu), tel qu'un moteur électrique, un motoréducteur.

11. Ensemble comprenant une trémie mélangeuse et distributrice (300) selon la revendication 9 et un porte-outil (100) destiné à être attelé à un engin pour soulever du sol et faire fonctionner ladite trémie, **caractérisé en ce que** le porte-outil (100) comprend un engrenage (Eg1) destiné à coopérer avec l'engrenage (Eg2) de ladite trémie pour entraîner à rotation son organe de mélange et de transfert (400) ainsi que son organe de vidange (500).

## Patentansprüche

1. Misch- und Austragtrichter (300), umfassend eine Mulde (330), die mit einer Bodenwand (336) versehen ist, ein Glied zum Entleeren des Inhalts des Trichters, **dadurch gekennzeichnet, dass** die Mulde (330) mittels einer Trennwand (Sp) in zwei Abteile aufgeteilt ist, wobei das erste Abteil (C1) dazu bestimmt ist, Schüttgut zu mischen, das darin enthalten sein kann, und das zweite Abteil (C2) dazu bestimmt ist, den Trichter zu entleeren, wobei der Trichter ein Misch- und Transferglied (400) aufweist, das in dem ersten Abteil (C1) angeordnet ist, wobei das Entleerungsglied (500) in dem zweiten Abteil (C2) angeordnet ist, wobei ein Durchgang (Ps) durch den unteren Teil der Trennwand (Sp) geht, der den Transfer von Material zwischen den beiden Abteilen (C1, C2) gestattet, wobei eine Austragöffnung (361) durch das zweite Abteil (C2) geht,
wobei das Misch- und Transferglied (400) eine Wendelfläche (Hce) umfasst, die sich nahe der Bodenwand (336) drehen kann und die in einer Rotationsrichtung ("-") ihrer Achse das Umrühren des Materials in dem ersten Abteil (C1) einleitet und in ihrer anderen Rotationsrichtung ("+") insbesondere den Transfer des Materials in das zweite Abteil (C2) durch den Durchgang (Ps) einleitet,
wobei des Entleerungsglied (500) Schaufeln (Pt) umfasst, die dazu ausgelegt sind, das in dem zweiten Abteil (C2) enthaltene Material in der anderen selben Rotationsrichtung ("+") durch die Austragöffnung (361) auszutragen.

2. Misch- und Austragtrichter (300) nach Anspruch 1, **dadurch gekennzeichnet, dass** Wendelflächensegmente (Sh) gegenüber der Trennwand (Sp) angeordnet sind und wobei ihre Steigung, dadurch dass sie winkelmäßig bezüglich des Endes der Wendelfläche (Hce) versetzt sind, dieselbe Richtung wie die der Wendelfläche (Hce) hat, wobei sich ihre Enden der dem ersten Mischabteil (C1) zugewandten Fläche der Trennwand (Sp) nähern, wodurch sie vor dem Durchgang (Ps) umlaufen können, um die Arbeit des Endes der Wendelfläche (Hce) abzuschließen.

3. Misch- und Austragtrichter (300) nach Anspruch 1 oder 2, **dadurch gekennzeichnet, dass** eine zweite Wendelfläche (Hci) im Inneren der ersten äußeren Wendelfläche (Hce) angeordnet ist, wobei ihre Steigungen invertiert sind, damit das gegenläufige Umrühren des in dem ersten Abteil (C1) enthaltenen Materials eingeleitet werden kann.

4. Misch- und Austragtrichter (300) nach Anspruch 1, 2 oder 3, **dadurch gekennzeichnet, dass** die Schaufeln (Pt) am Umfang eines von dem Entleerungsglied (500) getragenen Flanschs (Fs) angeordnet sind.

5. Misch- und Austragtrichter (300) nach Anspruch 4, **dadurch gekennzeichnet, dass** jede Schaufel (Pt) eine Platte (Pk) umfasst, die auf zwei Arten geneigt ist, wobei ihre Ebene von der Achse des Entleerungsglieds (500) versetzt ist und ihre Ebene in einer schräg zu der Achse des Entleerungsglieds (500) verlaufenden Ebene geneigt ist, und diese sich außerhalb des Trichters (300) schneiden, so dass jede Schaufel (Pt) das Material schippenartig und in der Rotationsrichtung ("-") des Entleerungsglieds (500) zu dem durch die Trennwand (Sp) gehenden Durchgang (Ps) befördern kann, damit das Material, das in dem zweiten Abteil (C2) enthalten sein kann, zum ersten Mischabteil (C1) entleert werden kann.

6. Misch- und Austragtrichter (300) nach Anspruch 5, **dadurch gekennzeichnet, dass** die Platte (Pk) jeder Schaufel (Pt) mit zwei Kanten (Rb) verlängert ist, die zueinander parallel angeordnet und zur gleichen Seite gewandt sind, wobei sich die beiden Kanten (Rb) jeweils in geringem Abstand von der dem zweiten Abteil (C2) zugewandten Fläche der Trennwand (Sp) sowie der inneren Fläche einer seitlichen Wand (320b) erstrecken, die Teil der Mulde (330) ist.

7. Misch- und Austragtrichter (300) nach einem der vorhergehenden Ansprüche, **dadurch gekennzeichnet, dass** eine Rutsche (360) mit der Austragöffnung (361) verbunden ist.

8. Misch- und Austragtrichter (300) nach einem der vorhergehenden Ansprüche, **dadurch gekennzeichnet, dass** das Misch- und Transferglied (400) sowie das Entleerungsglied (500) von einer gemeinsamen Welle (Ab) getragen werden oder jeweils von zwei koaxialen Wellen (T1, T2) getragen werden.

9. Misch- und Austragtrichter (300) nach Anspruch 8, **dadurch gekennzeichnet, dass** seine Welle (Ab) oder eine der koaxialen Wellen (T1, T2) direkt oder indirekt mit einem Getriebe (Eg2) verbunden ist.

10. Misch- und Austragtrichter (300) nach Anspruch 8, wobei der Trichter dazu bestimmt ist, an einer feststehenden Station verwendet zu werden, **dadurch gekennzeichnet, dass** seine Welle (Ab) oder eine der koaxialen Wellen (T1, T2) mit einem Motor (Mu) wie einem Elektromotor, einem Getriebemotor, verbunden ist.

11. Anordnung, umfassend einen Misch- und Austragtrichter (300) nach Anspruch 9 und einen Werkzeughalter (100), der dazu bestimmt ist, an eine Maschine angehängt zu werden, um den Trichter vom Boden anzuheben und ihn zu betätigen, **dadurch gekennzeichnet, dass** der Werkzeughalter (100) ein Getriebe (Eg1) umfasst, das dazu bestimmt ist, mit dem Getriebe (Eg2) des Trichters zusammenzuwirken, um sein Misch- und Transferglied (400) sowie sein Entleerungsglied (500) drehanzutreiben.

## Claims

1. Mixing and dispensing hopper (300), comprising a trough (330) provided with a bottom wall (336), and a member for emptying the contents of the hopper, **characterized in that** the trough (330) is separated into two compartments via a separating wall (Sp), the first compartment (C1) being intended for mixing the loose-fill material that it is able to contain and the second compartment (C2) being intended for emptying the hopper, the hopper including a mixing and transferring member (400) disposed in the first compartment (C1), the emptying member (500) being disposed in the second compartment (C2), a passage (Ps) for transferring the material between the two compartments (C1 and C2) passing through the lower portion of the separating wall (Sp), a discharge opening (361) passing through the second compartment (C2),
the mixing and transferring member (400) comprising a helicoid (Hce) which is able to rotate close to the bottom wall (336) and which, in a direction of rotation ("-") about its axis, stirs the material in the first compartment (C1) and, in its other direction of rotation ("+"), in particular transfers the material into the second compartment (C2) through said passage (Ps),
the emptying member (500) comprising paddles (Pt) designed to discharge, in said other direction of rotation ("+") about its axis, the material contained in the second compartment (C2) through the discharge opening (361) .

2. Mixing and dispensing hopper (300) according to Claim 1, **characterized in that** helicoid segments (Sh) are disposed facing the separating wall (Sp) and, by being angularly offset from the end of said helicoid (Hce), their pitch being in the same direction as that of said helicoid (Hce), their ends move closer to that face of the separating wall (Sp) that faces the first, mixing compartment (C1), allowing said segments to circulate in front of the passage (Ps) in order to complete the work of the end of said helicoid (Hce).

3. Mixing and dispensing hopper (300) according to Claim 1 or 2, **characterized in that** a second helicoid (Hci) is disposed inside the first, outer helicoid (Hce), the pitches of said helicoids being inverted so as to stir the material contained in the first compartment (C1) in opposite directions.

4. Mixing and dispensing hopper (300) according to Claim 1, 2 or 3, **characterized in that** the paddles (Pt) are disposed on the periphery of a flange (Fs) carried by the emptying member (500).

5. Mixing and dispensing hopper (300) according to Claim 4, **characterized in that** each paddle (Pt) comprises a plate (Pk) inclined in two directions, its plane being offset from the axis of the emptying member (500) and its plane being inclined in an oblique plane in relation to the axis of the emptying member (500), said planes intersecting outside the hopper (300), such that each paddle (Pt) can convey the material, in the manner of a shovel, and in the direction of rotation ("-") of the emptying member (500), towards the passage (Ps) passing through the separating wall (Sp), in order that the material which the second compartment (C2) may contain can be evacuated towards the first, mixing compartment (C1).

6. Mixing and dispensing hopper (300) according to Claim 5, **characterized in that** the plate (Pk) of each paddle (Pt) is continued by two lips (Rb) that are disposed parallel to one another and face towards the same side, the two lips (Rb) extending at a small distance from that face of the separating wall (Sp) that faces the second compartment (C2) and from the internal face of a constituent lateral wall (320b) of said trough (330).

7. Mixing and dispensing hopper (300) according to any one of the preceding claims, **characterized in that** a chute (360) is attached to the discharge opening (361).

8. Mixing and dispensing hopper (300) according to any one of the preceding claims, **characterized in that** the mixing and transferring member (400) and the emptying member (500) are carried by one and the same common shaft (Ab) or are carried by respective coaxial shafts (T1, T2) .

9. Mixing and dispensing hopper (300) according to Claim 8, **characterized in that** its shaft (Ab) or one of the coaxial shafts (T1, T2) is connected directly or indirectly to a gear (Eg2).

10. Mixing and dispensing hopper (300) according to Claim 8, the hopper being intended for use at a fixed station, **characterized in that** its shaft (Ab) or one of the coaxial shafts (T1, T2) is connected to a motor (Mu), such as an electric motor, a geared motor.

11. Assembly comprising a mixing and dispensing hopper (300) according to Claim 9 and a tool holder (100) intended to be coupled to a machine for raising said hopper from the ground and operating it, **characterized in that** the tool holder (100) comprises a gear (Eg1) intended to engage with the gear (Eg2) of said hopper in order to drive its mixing and transferring member (400) and its emptying member (500) in rotation.
